(19) Europäisches Patentamt
European Patent Office
Office européen des brevets

(11) **EP 3 273 272 A1**

(12) **EUROPEAN PATENT APPLICATION**

(43) Date of publication:
24.01.2018 Bulletin 2018/04

(51) Int Cl.:
**G01S 19/40** (2010.01)

(21) Application number: **17178545.4**

(22) Date of filing: **28.06.2017**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **20.07.2016 US 201615215288**

(71) Applicant: **Honeywell International Inc.
Morris Plains, NJ 07950 (US)**

(72) Inventors:
• **OREJAS, Martin
Morris Plains, NJ 07950 (US)**
• **FEDRA, Zbynek
Morris Plains, NJ 07950 (US)**
• **RAASAKKA, Jussi
Morris Plains, NJ 07950 (US)**

(74) Representative: **Houghton, Mark Phillip
Patent Outsourcing Limited
1 King Street
Bakewell, Derbyshire DE45 1DZ (GB)**

(54) **SYSTEMS AND METHODS FOR NEQUICK MODELING USING NEURAL NETWORKS**

(57) Systems and methods of determining ionosphere delay for a GNSS system are provided. In one embodiment, a GNSS system includes an antenna configured to receive GNSS signals from one or more GNSS satellites. The system further includes a signal processing circuit coupled to the antenna and configured to down convert the GNSS signals from RF to IF. The system further includes a processing device coupled to a memory, the memory including a database of a plurality of weights and an activation function for a neural network, the neural network trained to output an approximation of an output of a NeQuick model. The processing device configured to: apply the plurality of weights and the activation function for the neural network to a plurality of inputs generated from the GNSS signals; and estimate an indication of ionosphere delay based on an output of the neural network.

FIG. 1

EP 3 273 272 A1

**Description**

BACKGROUND

Ionosphere induced error is the largest error that affects Global Navigation Satellite System (GNSS) receivers operating in a single frequency mode. To compensate for ionosphere error, many ionosphere error models have been developed. Global Positioning System (GPS) receivers use the well-known Klobuchar model while future Galileo receivers are expected to use the NeQuick model, which is also referred to as the NeQuick G model.

The NeQuick model is a tridimensional and time-dependent ionospheric electron density model, which provides electron density in the ionosphere as a function of position and time. It enables computation of ionospheric delays as the integrated electron density along any ray path. The European GNSS Agency (GSA) has recently published a new document on the NeQuick Ionospheric Model titled "European GNSS (Galileo) Open Service Ionospheric Correction Algorithm for Galileo Single Frequency Users", which contains a detailed description of the algorithm.

The NeQuick model is expected to provide improved performance compared to the Klobuchar model. However, the NeQuick model was originally developed for scientific purposes without consideration regarding its computational demands. Preliminary tests show that the NeQuick model can be more than 10,000 times more computationally demanding that the Klobuchar model, and has been shown to be as much as 50,000 times more computationally demanding in certain situations. Therefore, implementing the NeQuick model in an aviation receiver or another standalone GNSS receiver has proven difficult.

For the reasons above and for other reasons included below which will become apparent to one having skill in the art upon reading and studying the specification, there is a need in the art for improved systems and methods that can implement the NeQuick model in GNSS receivers.

SUMMARY

The embodiments of the present disclosure provide systems and methods for determining ionosphere delay for a GNSS system and will be understood by reading and studying the following specification.

In one embodiment, a GNSS system includes an antenna configured to receive GNSS signals from one or more GNSS satellites. The system further includes a signal processing circuit coupled to the antenna, the signal processing circuit configured to down convert the GNSS signals from RF to IF. The system further includes a processing device coupled to a memory, the memory including a database of a plurality of weights and an activation function for a neural network, the neural network trained to output an approximation of an output of a NeQuick model. The processing device is configured to: apply the plurality of weights and the activation function for the neural network to a plurality of inputs generated from the GNSS signals; and estimate an indication of ionosphere delay based on an output of the neural network.

DRAWINGS

Understanding that the drawings depict only exemplary embodiments and are not therefore to be considered limiting in scope, the exemplary embodiments will be described with additional specificity and detail through the use of the accompanying drawings, in which:

Figure 1 is a block diagram of an exemplary GNSS system utilizing a neural network according to one embodiment of the present disclosure;

Figure 2 is a block diagram of a neural network for approximating the NeQuick model according to one embodiment of the present disclosure;

Figure 3 is a block diagram of a neural network for approximating the NeQuick model according to one embodiment of the present disclosure;

Figure 4 is a flow chart illustrating a method according to one embodiment of the present disclosure; and

Figure 5 is a flow chart illustrating a method according to one embodiment of the present disclosure.

In accordance with common practice, the various described features are not drawn to scale but are drawn to emphasize specific features relevant to the exemplary embodiments.

DETAILED DESCRIPTION

In the following detailed description, reference is made to the accompanying drawings that form a part hereof, and in which is shown by way of illustration specific illustrative embodiments. However, it is to be understood that other embodiments may be utilized and that logical, mechanical, and electrical changes may be made. Furthermore, the method presented in the drawing figures and the specification is not to be construed as limiting the order in which the individual steps may be performed. The following detailed description is, therefore, not to be taken in a limiting sense.

The embodiments described below enable a GNSS receiver to approximate the output of the NeQuick model to an acceptable degree of accuracy by using a neural network. The accuracy of the neural network is determined by the correlation of its output to the output of the NeQuick model when applying the same inputs.

Accordingly, the neural network is trained to output an approximation of the output of the NeQuick model that is within a desired tolerance when applying the same inputs. Since the computational demands of a neural network are significantly less than those of the actual NeQuick model, the use of a neural network enables GNSS receivers to perform real-time compensation for ionospheric error.

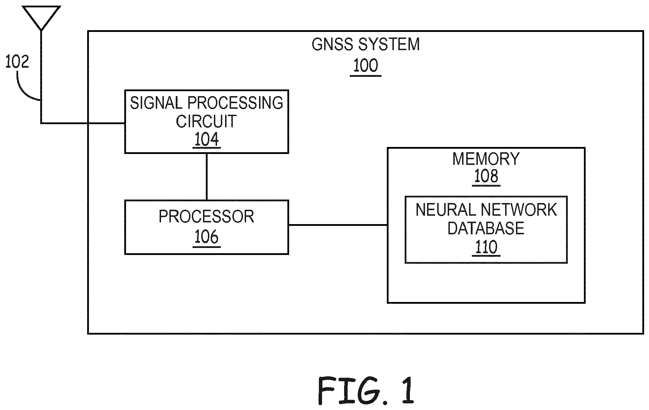

Figure 1 is a block diagram of a GNSS system 100 that utilizes a neural network according to one embodiment of the present disclosure. In exemplary embodiments, the GNSS system 100 includes an antenna 102, a signal processing circuit 104, a processing device 106, and a memory 108 including a neural network database 110. The GNSS system 100 receives GNSS signals from a plurality of satellites. In exemplary embodiments, the GNSS system 100 is configured to operate using GNSS signals from satellites that are part of the Galileo constellation or another GNSS satellite constellation that requires use of the NeQuick model.

In some embodiments, the GNSS system 100 is a standalone GNSS receiver. In other embodiments, the GNSS system 100 may be incorporated into a vehicle such as an aircraft. In such embodiments, the GNSS system 100 may be incorporated into a multi-mode radio or may be incorporated into one or more systems of the vehicle.

GNSS system 100 is able to determine its position in relation to the Earth by communicating with the satellites. GNSS satellites each transmit a carrier signal to the GNSS system 100 that has been modulated with Pseudo Random Noise (PRN) and data signals. The data signal includes an accurate time that was provided by at least one atomic clock. The data signal may also describe clock behavior, status messages, and correction data that corrects ionospheric delay, time offsets, and the like.

To process the signals from the GNSS satellites, the GNSS system 100 includes an antenna 102 that receives signals transmitted from GNSS satellites. In some embodiments, the antenna 102 is configured to operate in a single frequency mode. In other embodiments, the antenna 102 is configured to operate in a dual frequency mode but the receiver still operates in a single frequency mode if one of the frequencies is lost. In any case, the GNSS system 100 implements and utilizes a neural network trained to approximate the output of the NeQuick model to compensate for ionospheric error while operating in the single frequency mode.

In exemplary embodiments, the antenna 102 provides a signal to a signal processing circuit 104 configured to down convert the received GNSS signal from a radio frequency (RF) signal to an intermediate frequency (IF) signal. In exemplary embodiments, the signal processing circuit 104 includes a RF front end that down converts the RF signal received from the antenna 102 for further processing by the processing device 106. In exemplary embodiments, the signal processing circuit 104 may include amplifiers, mixers, analog-to-digital (A/D) converters, and other electronics that may be used for receiving a signal from a satellite and down converting the RF signal to an IF signal. In some embodiments, GNSS system 100 may include components to further down convert the IF signal to a baseband signal. In some embodiments, the IF signal or baseband signal is provided to the processing device 106. In other embodiments, the signal processing circuit 104 includes components that perform further signal processing (*e.g.*, generating the plurality of inputs for the neural network) prior to providing the GNSS signal to the processing device 106.

The processing device 106 is coupled to a memory 108 and is configured to determine an estimated location of the GNSS system 100 using the GNSS signals. In exemplary embodiments, the processing device 106 may include one or more processors, a microprocessor, a field-programmable gate array (FPGA), an application-specific integrated circuit (ASIC), or the like. In some embodiments, the processing device 106 may incorporate memory 108. In exemplary embodiments, the processing device 106 generates a plurality of inputs for the neural network using the processed GNSS signals from the signal processing circuit 104. To produce an accurate estimate of location, the GNSS system 100 has to compensate for ionosphere error. As discussed above, the NeQuick model is required for GNSS systems 100 operating using Galileo signals. The NeQuick model is essentially a non-linear algorithm with nine inputs and one output. The nine inputs to the NeQuick model include: the effective ionization level Az (which can be computed based on the parameters ao, a1, a2 broadcasted in the Galileo navigation message); the receiver position (latitude, longitude, altitude); satellite position (latitude, longitude, altitude); time of day; and season of the year. As discussed above, the NeQuick model is too computationally demanding for real-time applications. Instead of using the full NeQuick model, the GNSS system 100 compensates for ionosphere error by using a neural network that approximates the output of the NeQuick model. Since the NeQuick model has a finite number of inputs and one output, the neural network can be used to approximate the output of the NeQuick model to a desired level of accuracy after sufficient training.

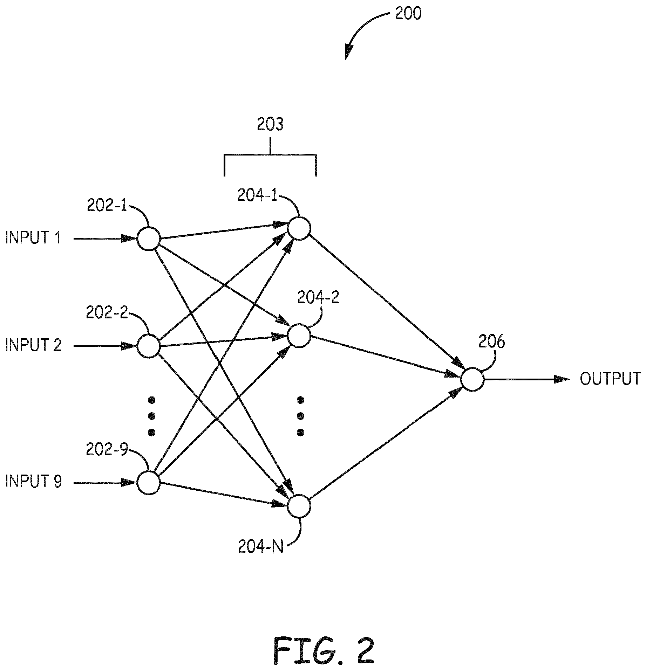

Figure 2 is a block diagram of an example neural network 200 for approximating the NeQuick model. In exemplary embodiments, the neural network 200 is an artificial neural network (ANN) that mimics a biological neural network. An ANN generally includes a system of interconnected neurons (also referred to herein as nodes) that exchange messages between each other and the connections between neurons have associated adaptive numeric weights that can be adjusted based on experience. In exemplary embodiments, the neural network 200 is a feed-forward network having at least one hidden layer 203 that contains a finite number of neurons 204, which is also known as a multilayer perceptron. It should be understood that other suitable neural network structures could also be used. The neural network 200 can be implemented using any number of neurons 204 in the hidden layers 203 that achieves a desired level of accuracy after training. For example, the hidden layer 203 may include 2,000 neurons. In some embodiments, the neural network 200 includes more than one hidden layer 203. In such embodiments, each hidden layer 203 may include any number of neurons 204 that achieves a desired level of accuracy after training.

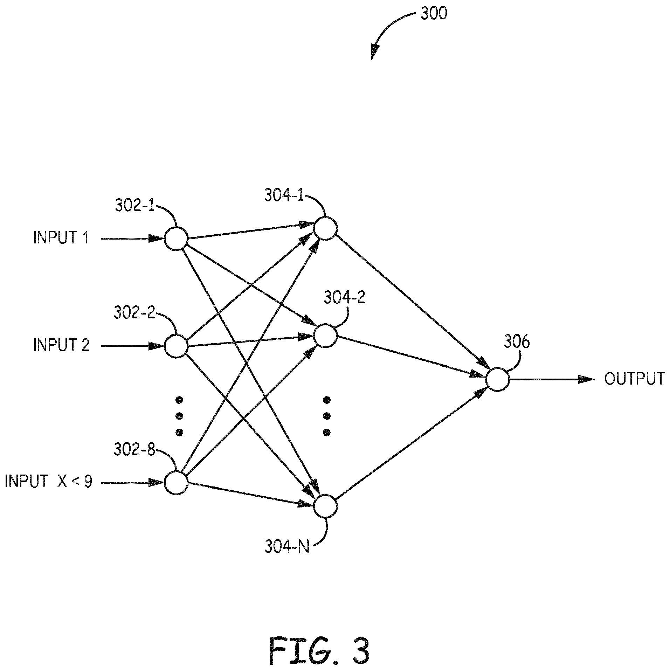

In some embodiments, the neural network 200 includes nine input nodes 202 in the input layer and one output node 206 in the output layer, which corresponds to the exact number of inputs and outputs as the actual NeQuick model. In other embodiments, which will be described in greater detail below with respect to Figure 3, the neural network includes fewer than nine inputs and one output. Regardless, each input of the neural network 200 is connected to each neuron 204 of the hidden layer 203. Each of the connections has a respective weight applied to it and the weights are revised by training. In order for the neural network 200 to accurately approximate the output of the NeQuick model, the proper weights are identified during training as explained below.

The neural network 200 is trained and the above mentioned weights identified using supervised learning, which includes the machine learning task of inferring a function from a set of training data. In addition to the number of hidden layers 203 and the number of nodes 204 in the hidden layers 203, other parameters of the neural network 200 are chosen prior to training. For example, the activation function, learning rate, and the like are also selected.

The neural network 200 is trained using data generated using the actual NeQuick model. In particular, the training data set can be generated by varying the inputs of the NeQuick model to obtain different outputs. Theoretically, since the NeQuick model and the range of values for each input of the NeQuick model are known, the output of the NeQuick model can be determined for any combination of inputs that would be used by the GNSS system 100 in real-time. The training data is generated offline.

In exemplary embodiments, a backpropagation algorithm, which uses gradient descent to minimize the average square, is used to train the neural network. Generally, a backpropagation algorithm, using the training data (combination of inputs and the known output value for the combination of inputs), estimates the weights of the connections by determining the weights that minimize the error of the output of the neural network across the entirety of inputs used during training. The backpropagation algorithm estimates the weights between each input node 202 and each node 204 of the hidden layer 203 and also between each node 204 of the hidden layer 203 and the output node 206. The estimate of a weight is obtained by calculating the partial derivative of the error with respect to each weight using the following formula:

$$\frac{\partial E}{\partial w_{ij}} = \frac{\partial E}{\partial o_j} \frac{\partial o_j}{\partial net_j} \frac{\partial net_j}{\partial w_{ij}}$$

where $o_j$ is the output of the node

$$o_j = \varphi\big(net_j\big) = \varphi\left(\sum_{k=1}^{n} w_{kj} o_k\right)$$

and the input ($net_j$) to a node is the weighted sum of outputs $o_k$ of previous nodes and $\varphi$ is the activation function. Each weight is then updated as follows:

$$\Delta w_{ij} = -\alpha \frac{\partial E}{\partial w_{ij}}$$

where $\alpha$ is the learning rate of the neural network.

While the training can be computationally demanding, the training only needs to be performed once and can be performed offline. Therefore, the training does not need to be performed by the GNSS system 100 and is not performed in real-time. While the training has been described with regard to a backpropagation algorithm, it should be understood that any sufficient algorithm known to one having skill in the art may be used for the supervised learning training of the neural network.

Upon completion of the training, a database 110 having the appropriate weights for each connection of the neural network 200 is generated. In some embodiments, the database 110 may also include the activation function of the neural network 200. The database 110 can be loaded into the memory 108 of the GNSS system 100 for use by the processing device 106. In exemplary embodiments, the structure of the neural network can also be loaded into the memory of the GNSS system 100 for use by the processing device 106. In one embodiment of operation, the GNSS system 100 receives GNSS signals from one or more satellites via the antenna 102 and the signals are converted from a RF to an IF by the signal processing circuit 104. Using the received GNSS signals and the neural network database 110, the processing device 106 estimates an indication of the ionosphere error (for example, the total electron count or TEC) that is similar to that which would be obtained using the full NeQuick model. In particular, the processing device 106 inputs data from the GNSS signals that correspond to the nine input nodes 202 for the neural network 200 and applies the activation function and weights stored in the neural network database 110. In some embodiments, the processing device 106 loads the weights stored in the neural network database 110 only once when it is first initialized. In other embodiments, the processing device 106 loads the weights stored in the neural network database 110 each time it performs the estimation. Since the neural network 200 will not perfectly approximate the output of the NeQuick model, an additional residual error is applied to the indication of ionosphere delay output by the processing device 106. In exemplary embodiments, the residual error or estimation of expected error between the output of the neural network and the output of the NeQuick model is provided by processing device 106. In exemplary embodiments, the residual error or estimation of expected error can include a maximum error, a one sigma error, or another statistical representation of error known to one having skill in the art. Using the indication of ionosphere error generated using the neural network database 110, the GNSS system 100 can also calculate a position estimate that complies with the requirements for Galileo specific systems.

While a neural network having nine inputs and valid operation over the entire range of inputs for the NeQuick model provides sufficient accuracy for most applications (correlates sufficiently with the NeQuick model), it may be desirable or necessary to further increase the accuracy of the neural network 200 and accordingly the GNSS system 100. One potential method to reduce the computational demands and also increase the accuracy of the neural network 200 would be reducing the variation of the inputs for the neural network 200, which reduces the complexity of the neural network 200. By reducing the complexity of the neural network 200, the processing required to calculate the indication of ionospheric error is reduced and the accuracy of the neural network output can be increased.

In exemplary embodiments, multiple neural networks 200 can be generated based on a priori partitioning of inputs. Each neural network 200 can be generated using the training techniques described above. In exemplary embodiments, the memory 108 of the GNSS system 100 can include a specific neural network 200 or neural networks 200 that will be valid for a portion of the possible operational environment of the GNSS system 100. Each specific neural network 200 can be directed to a subset of one or more values for one or more inputs of the NeQuick model. For example, distinct neural networks 200 could be generated for particular geographic regions for receiver position, which would include a selected range of continuous values corresponding to the geographic region. In such embodiments, each neural network 200 may be valid only for a particular range of latitude, longitude, and altitude. In exemplary embodiments, each distinct neural network 200 may be specifically directed to subsets of one or more values for a different input of the NeQuick model.

In one example embodiment of operation, the GNSS system 100 loads one or more of the multiple neural networks 200 into memory 108 based on the environment that the GNSS system 100 operates in. For example, if the GNSS system 100 operates exclusively in a particular region of the Earth, a neural network 200 specifically directed to the particular region of the Earth is used by the GNSS system 100. The neural network database 110 in memory 108 may be replaced or otherwise modified if the environment or needs of the GNSS system 100 change. In exemplary embodiments, the GNSS system 100 may download a different neural network database 110 from a plurality of neural network databases 110 stored on a central server or other aggregation point. In embodiments where the GNSS system 100 is included in an aircraft, the plurality of neural network databases 110 would require certification by a regulatory agency prior to use.

Another potential method for increasing the accuracy of the neural network and the GNSS system 100 would be decreasing the amount of inputs for the neural network, which would also reduce the complexity of the neural network. Similar to the first method described above, the processing required to calculate the ionospheric error is reduced and the accuracy of the neural network output can be increased when the amount of inputs is decreased.

Figure 3 is a block diagram of an example neural network 300 for approximating the NeQuick model having reduced inputs 302. The neural network 300 is similar to neural network 200 except that the amount of inputs 302 is fewer than nine (for example, eight). Accordingly, the training methods and utilization by the GNSS system 100 described above with respect to neural network 200 is also applicable to neural network 300.

In exemplary embodiments, the amount of inputs required for the neural network 300 can be reduced using a similar concept to that described above for reducing the variation of the inputs. In particular, since some of the inputs of the NeQuick model have a finite number of values or states, distinct neural networks 300 can be generated for each finite value or state. For example, the season of the year has only four inputs (spring, summer, fall, and winter) and a distinct neural network 300 having only eight inputs can be formed for each respective season of the year. By reducing the amount of inputs 302 of the neural network 300, the neural network 300 can be smaller (*e.g.* fewer nodes in the hidden layer), easier to train, and more accurate than a neural network having nine inputs.

In exemplary embodiments, a neural network 300 having eight inputs may also be further simplified using a priori partitioning of inputs as described above. While the amount of neural networks needed to cover the full range of inputs for the NeQuick model would increase, the added accuracy of the neural network may justify the time, memory, and organization expense related to developing the additional neural networks. Additionally, those networks would be less computationally demanding as they would require a fewer number of neurons.

By using a neural network that is trained to output an approximation of the output of the NeQuick model, the GNSS system 100 can estimate a TEC value that corresponds sufficiently to the TEC value generated using the actual NeQuick model. Since the computational demands of a neural network are significantly less than those of the actual NeQuick model, the use of a neural network enables GNSS receivers to perform real-time compensation for ionospheric error.

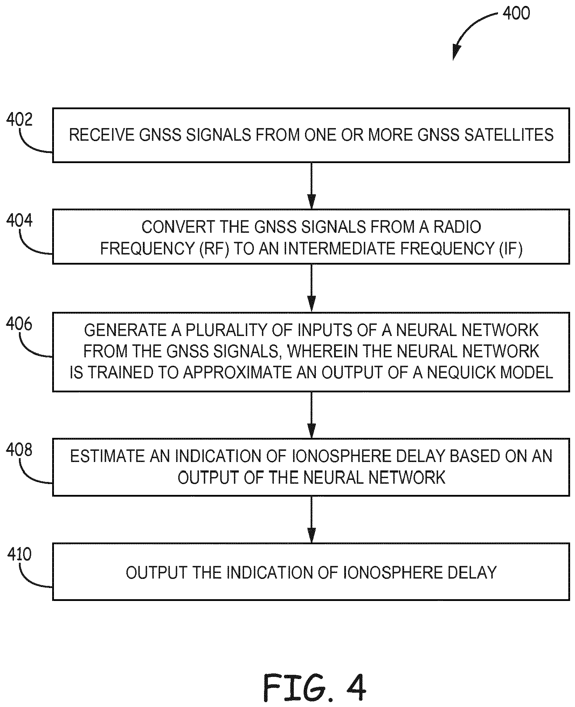

Figure 4 is a flow chart illustrating a method 400 according to one embodiment of the present disclosure. It should be understood that method 400 may be implemented using any of the embodiments described above with respect to Figures 1-3. As such, elements of method 400 may be used in conjunction with, in combination with, or substituted for elements of those embodiments described above. Further, the functions, structures, and other description of elements for such embodiments described above may apply to like named elements of method 400 and *vice versa.*

The method begins at 402 with receiving GNSS signals from one or more GNSS satellites. In exemplary embodiments, the GNSS signals are received by a single frequency antenna of a GNSS system.

The method proceeds to 404 with converting the GNSS signals from radio frequency (RF) signals to intermediate frequency (IF) signals. In exemplary embodiments, the conversion is implemented using a signal processing circuit, which may include a RF front end for example. In exemplary embodiments, the signal processing circuit may include amplifiers, mixers, analog-to-digital (A/D) converters, and other electronics that may be used for receiving a signal from a satellite and down converting the RF signal to an IF signal. In some embodiments, the method further includes down converting the IF signals to a baseband signals.

The method proceeds to 406 with generating a plurality of inputs of a neural network, wherein the neural network is trained to output an approximation of an output of a NeQuick model. In exemplary embodiments, the down converted GNSS signals are sampled and processed to obtain information regarding the plurality of inputs for the neural network. In some embodiments, the plurality of inputs of the neural network correspond to the inputs for the NeQuick model, which are listed above with respect to Figures 1-3. In other embodiments, the plurality of inputs of the neural network correspond to a subset of the inputs for the NeQuick model.

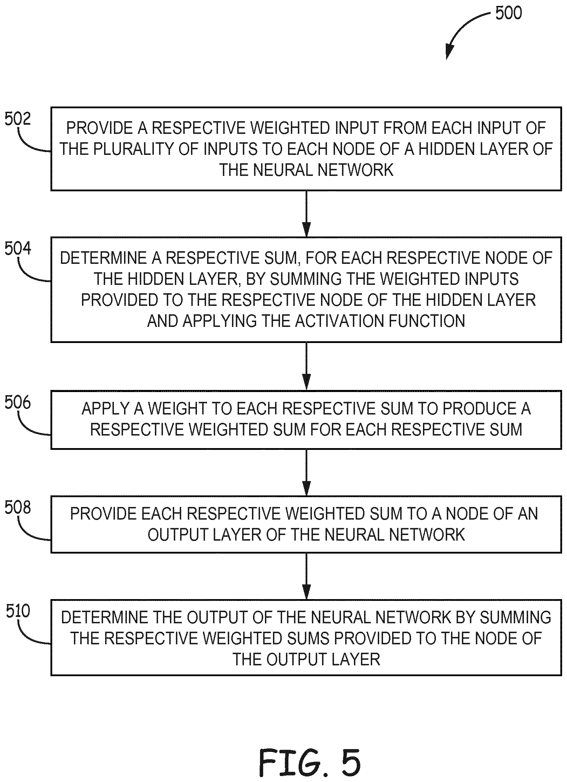

The method proceeds to 408 with estimating an indication of ionosphere delay based on an output of the neural network. As with the NeQuick model, the neural network has a single output. In exemplary embodiments, the output of the neural network comprises a weighted sum of node outputs from at least one hidden layer in the neural network. In exemplary embodiments, the weights and an activation function for the neural network are applied to the plurality of inputs to generate a total electron count (TEC) for a particular ray path. A particular method for estimating the indication of ionosphere delay based on the output of the neural network is described below with respect to Figure 5.

The method optionally proceeds to 410 with outputting the indication of ionosphere delay. In some embodiments, the indication of ionosphere delay is output to another component or module of the GNSS system utilizing method 400 that is specifically configured to estimate a position of the GNSS system.

Figure 5 is a flow chart illustrating an example method 500 of estimating an indication of ionosphere delay based on an output of the neural network according to one embodiment of the present disclosure. Method 500 further defines step 408 described above with respect to Figure 4. It should be understood that method 500 may be implemented using any of the embodiments described above with respect to Figures 1-4. As such, elements of method 500 may be used in conjunction with, in combination with, or substituted for elements of those embodiments described above. Further, the functions, structures, and other description of elements for such embodiments described above may apply to like named elements of method 500 and *vice versa.*

The method begins at 502 with providing a respective weighted input from each input of the plurality of inputs to each node of a hidden layer of the neural network. In exemplary embodiments, each respective weighted input is generated by applying a respective weight to the particular input, where the respective weight is associated with a connection between the particular input and the node of the hidden layer. In exemplary embodiments, the respective weights are determined using the training methods described above.

The method proceeds to 504 with determining a respective sum, for each respective node of the hidden layer, by summing the weighted inputs provided to the respective node of the hidden layer. In exemplary embodiments, the respective sum is determined using an activation function for the neural network.

The method proceeds to 506 with applying a weight to each respective sum to produce a respective weighted sum for each respective sum. In exemplary embodiments, the weight applied to each respective sum is associated with the connection between the respective node of the hidden layer and the node of the output layer of the neural network.

The method proceeds to 508 with providing each respective weighted sum to a node of an output layer of the neural network. As discussed above, there is only a single output of the NeQuick model. Accordingly, the neural network has a single output node in the output layer.

The method proceeds to 510 with determining the output of the neural network by summing the respective weighted sums provided to the node of the output layer. In exemplary embodiments, the respective sum is determined using an activation function for the neural network. In exemplary embodiments, the output sum is the output of the neural network.

In this manner, method 500 enables the estimation of an indication of ionosphere delay based on the inputs of the neural network. By applying the weights identified during training and the activation function for the neural network, the neural network outputs an approximation of the output of the NeQuick model that is accurate enough to satisfy the requirements for GNSS navigation.

Example Embodiments

Example 1 includes a Global Navigation Satellite System (GNSS) system comprising: an antenna configured to receive Global Navigation Satellite System (GNSS) signals from one or more GNSS satellites; a signal processing circuit coupled to the antenna, wherein the signal processing circuit is configured to down convert the GNSS signals from a radio frequency (RF) to an intermediate frequency (IF); and a processing device coupled to a memory, wherein the memory includes a database of a plurality of weights and an activation function for a neural network, wherein the neural network is trained to output an approximation of an output of a NeQuick model, wherein the processing device is configured to: apply the plurality of weights and the activation function for the neural network to a plurality of inputs generated from the GNSS signals; and estimate an indication of ionosphere delay based on an output of the neural network.

Example 2 includes the GNSS system of Example 1, wherein the plurality of inputs comprises nine inputs, wherein each input of the plurality of inputs corresponds to an input of the NeQuick model.

Example 3 includes the GNSS system of Example 2, wherein the neural network is directed to a specific subset of one or more values for at least one input of the NeQuick model.

Example 4 includes the GNSS system of Example 2, wherein the neural network is selected from a plurality of neural networks, wherein each neural network of the plurality of neural networks is directed to a specific subset of one or more values for at least one input of the NeQuick model.

Example 5 includes the GNSS system of any of Examples 1-4, wherein the plurality of inputs comprises eight inputs, wherein each of the eight inputs corresponds to an input of the NeQuick model, wherein the neural network is directed to a specific value for an input of the NeQuick model that does not correspond to the eight inputs.

Example 6 includes the GNSS system of any of Examples 1-5, wherein the processing device is further configured to generate the plurality of inputs from the GNSS signals.

Example 7 includes the GNSS system of any of Examples 1-6, wherein the GNSS system is incorporated into a multi-mode radio onboard a vehicle.

Example 8 includes the GNSS system of any of Examples 1-7, wherein the GNSS system is configured to process Galileo specific GNSS signals.

Example 9 includes the GNSS system of Example 1-8, wherein the processing device is further configured to determine at least an estimated position of the GNSS system using the indication of ionosphere delay and the received GNSS signals.

Example 10 includes the GNSS system of any of Examples 1-9, wherein a structure of the neural network is stored in the memory.

Example 11 includes the GNSS system of any of Examples 1-10, wherein the processing device is further configured to provide an estimation of expected error between the output of the neural network and the output of the NeQuick model.

Example 12 includes a method of determining the ionosphere delay for a Global Navigation Satellite System (GNSS) receiver, comprising: receiving GNSS signals from one or more satellites; converting the GNSS signals from a radio frequency (RF) to an intermediate frequency (IF); generating a plurality of inputs of a neural network from the GNSS signals, wherein the neural network is trained to output an approximation of an output of a NeQuick model; and estimating an indication of ionosphere delay based on an output of the neural network.

Example 13 includes the method of Example 12, wherein estimating an indication of ionosphere delay based on an output of the neural network comprises: providing a respective weighted input from each input of the plurality of inputs to each node of a hidden layer of the neural network; determining a respective sum, for each respective node of the hidden layer, by summing the weighted inputs provided to the respective node of the hidden layer and applying the activation function; applying a weight to each respective sum to produce a respective weighted sum for each respective sum; providing each respective weighted sum to a node of an output layer of the neural network; and determining the output of the neural network by summing the respective weighted sums provided to the node of the output layer.

Example 14 includes the method of any of Examples 12-13, further comprising determining a position of the GNSS receiver using the received GNSS signals and the indication of ionosphere delay.

Example 15 includes the method of any of Examples 12-14, wherein the plurality of inputs of the neural network comprises nine inputs, wherein each input of the plurality of inputs corresponds to an input of the NeQuick model.

Example 16 includes the method of Example 15, wherein the neural network is directed to a specific subset of one or more values for at least one input of the NeQuick model.

Example 17 includes the method of any of Examples 12-16, wherein the plurality of inputs of the neural network comprises eight inputs, wherein each of the eight inputs corresponds to an input of the NeQuick model, wherein the neural network is directed to a specific value for an input of the NeQuick model that does not correspond to the eight inputs.

Example 18 includes a non-transitory computer readable medium having computer-executable instructions stored thereon which, when executed by one or more processing devices, cause the one or more processing devices to: generate a plurality of inputs of a neural network based on received GNSS signals, wherein the neural network is trained to output an approximation of an output of a NeQuick model, wherein the neural network is stored on a memory; apply a plurality of weights and an activation function of the neural network to the plurality of inputs; and estimate an indication of ionosphere delay using the neural network.

Example 19 includes the non-transitory computer readable medium of Example 18, wherein the plurality of inputs comprises nine inputs, wherein each input of the plurality of inputs corresponds to an input of the NeQuick model.

Example 20 includes the non-transitory computer readable medium of any of Examples 18-19, wherein the plurality of inputs comprises eight inputs, wherein each of the eight inputs corresponds to an input of the NeQuick model, wherein the neural network is directed to a specific value for an input of the NeQuick model that does not correspond to the eight inputs.

In various alternative embodiments, system elements, method steps, or examples described throughout this disclosure (such as the GNSS system 100, or subparts thereof, the processing device 106, for example) may be implemented using one or more computer systems, field programmable gate arrays (FPGAs), application specific integrated circuits (ASICs), or similar devices and executing code to realize those elements, processes, or examples, said code stored on a non-transient data storage device. Therefore, other embodiments of the present disclosure may include elements comprising program instructions resident on computer readable media which when implemented by such computer systems, enable them to implement the embodiments described herein. As used herein, the term "computer readable media" refers to tangible memory storage devices having non-transient physical forms. Such non-transient physical forms may include computer memory devices, such as but not limited to punch cards, magnetic disk or tape, any optical data storage system, flash read only memory (ROM), non-volatile ROM, programmable ROM (PROM), erasable-programmable ROM (E-PROM), random access memory (RAM), or any other form of permanent, semi-permanent, or temporary memory storage system or device having a physical, tangible form. Program instructions include, but are not limited to computer-executable instructions executed by computer system processors and hardware description languages such as Very High Speed Integrated Circuit (VHSIC) Hardware Description Language (VHDL).

Although specific embodiments have been illustrated and described herein, it will be appreciated by those of ordinary skill in the art that any arrangement, which is calculated to achieve the same purpose, may be substituted for the specific embodiments shown. Therefore, it is manifestly intended that this invention be limited only by the claims and the equivalents thereof.

## Claims

1. A Global Navigation Satellite System (GNSS) system comprising:

   an antenna (102) configured to receive Global Navigation Satellite System (GNSS) signals from one or more GNSS satellites;
   a signal processing circuit (104) coupled to the antenna (102), wherein the signal processing circuit (104) is configured to down convert the GNSS signals from a radio frequency (RF) to an intermediate frequency (IF); and
   a processing device (106) coupled to a memory (108), wherein the memory (108) includes a database (110) of a plurality of weights and an activation function for a neural network, wherein the neural network is trained to output an approximation of an output of a NeQuick model, wherein the processing device (106) is configured to:

   apply the plurality of weights and the activation function for the neural network to a plurality of inputs generated from the GNSS signals;
   estimate an indication of ionosphere delay based on an output of the neural network.

2. The GNSS system (100) of claim 1, wherein the plurality of inputs comprises nine inputs, wherein each input of the plurality of inputs corresponds to an input of the NeQuick model.

3. The GNSS system (100) of claim 2, wherein the neural network is directed to a specific subset of one or more values for at least one input of the NeQuick model.

4. The GNSS system (100) of claim 1, wherein the plurality of inputs comprises eight inputs, wherein each of the eight inputs corresponds to an input of the NeQuick model, wherein the neural network is directed to a specific value for an input of the NeQuick model that does not correspond to the eight inputs.

5. The GNSS system (100) of claim 1, wherein the GNSS system (100) is incorporated into a multimode radio onboard a vehicle.

6. The GNSS system (100) of claim 1, wherein the GNSS system (100) is configured to process Galileo specific GNSS signals.

7. The GNSS system (100) of claim 1, wherein a structure of the neural network is stored in the memory (108).

8. A method (400) of determining the ionosphere delay for a Global Navigation Satellite System (GNSS) receiver, comprising:

   receiving (402) GNSS signals from one or more satellites;
   converting (404) the GNSS signals from a radio frequency (RF) to an intermediate frequency (IF);
   generating (406) a plurality of inputs of a neural network from the GNSS signals, wherein the neural network is trained to output an approximation of an output of a NeQuick model;
   estimating (408) an indication of ionosphere delay based on an output of the neural network; and
   outputting (410) the indication of ionosphere delay.

9. The method of claim 8, wherein the plurality of inputs of the neural network comprises nine inputs, wherein each input of the plurality of inputs corresponds to an input of the NeQuick model.

10. The method of claim 8, wherein the plurality of inputs of the neural network comprises eight inputs, wherein each of the eight inputs corresponds to an input of the NeQuick model, wherein the neural network is directed to a specific value for an input of the NeQuick model that does not correspond to the eight inputs.

GNSS SYSTEM
100

102

SIGNAL PROCESSING
CIRCUIT
104

PROCESSOR
106

MEMORY
108

NEURAL NETWORK
DATABASE
110

FIG. 1

FIG. 2

300

302-1

INPUT 1

304-1

302-2

INPUT 2

304-2

306

OUTPUT

302-8

INPUT X < 9

304-N

FIG. 3

400

| 402 | RECEIVE GNSS SIGNALS FROM ONE OR MORE GNSS SATELLITES |
|---|---|

| 404 | CONVERT THE GNSS SIGNALS FROM A RADIO FREQUENCY (RF) TO AN INTERMEDIATE FREQUENCY (IF) |
|---|---|

| 406 | GENERATE A PLURALITY OF INPUTS OF A NEURAL NETWORK FROM THE GNSS SIGNALS, WHEREIN THE NEURAL NETWORK IS TRAINED TO APPROXIMATE AN OUTPUT OF A NEQUICK MODEL |
|---|---|

| 408 | ESTIMATE AN INDICATION OF IONOSPHERE DELAY BASED ON AN OUTPUT OF THE NEURAL NETWORK |
|---|---|

| 410 | OUTPUT THE INDICATION OF IONOSPHERE DELAY |
|---|---|

# FIG. 4

500

502 | PROVIDE A RESPECTIVE WEIGHTED INPUT FROM EACH INPUT OF THE PLURALITY OF INPUTS TO EACH NODE OF A HIDDEN LAYER OF THE NEURAL NETWORK

504 | DETERMINE A RESPECTIVE SUM, FOR EACH RESPECTIVE NODE OF THE HIDDEN LAYER, BY SUMMING THE WEIGHTED INPUTS PROVIDED TO THE RESPECTIVE NODE OF THE HIDDEN LAYER AND APPLYING THE ACTIVATION FUNCTION

506 | APPLY A WEIGHT TO EACH RESPECTIVE SUM TO PRODUCE A RESPECTIVE WEIGHTED SUM FOR EACH RESPECTIVE SUM

508 | PROVIDE EACH RESPECTIVE WEIGHTED SUM TO A NODE OF AN OUTPUT LAYER OF THE NEURAL NETWORK

510 | DETERMINE THE OUTPUT OF THE NEURAL NETWORK BY SUMMING THE RESPECTIVE WEIGHTED SUMS PROVIDED TO THE NODE OF THE OUTPUT LAYER

FIG. 5

Europäisches
Patentamt

European
Patent Office

Office européen
des brevets

# EUROPEAN SEARCH REPORT

Application Number

EP 17 17 8545

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2014/009331 A1 (TOMINAGA TAKAKI [JP] ET AL) 9 January 2014 (2014-01-09) * column 0039 - column 0052; figures 1-3 * | 1-10 | INV. G01S19/40 |
| Y | KORNYANAT WATTHANASANGMECHAI ET AL: "TEC prediction with neural network for equatorial latitude station in Thailand", EARTH, PLANETS AND SPACE, vol. 64, no. 6, 1 June 2012 (2012-06-01), pages 473-483, XP055432688, JP ISSN: 1343-8832, DOI: 10.5047/eps.2011.05.025 * the whole document * | 1-10 | |
| A | SUR DIBYENDU ET AL: "Performance analysis of artificial neural network based TEC models at different longitudes in the low latitude region", 2014 XXXITH URSI GENERAL ASSEMBLY AND SCIENTIFIC SYMPOSIUM (URSI GASS), IEEE, 16 August 2014 (2014-08-16), pages 1-4, XP032663656, DOI: 10.1109/URSIGASS.2014.6929827 [retrieved on 2014-10-17] * the whole document * | 1-10 | TECHNICAL FIELDS SEARCHED (IPC) G01S |
| A | ARAGON-ANGEL ANGELA ET AL: "Exploiting Galileo Ionospheric Disturbance Flags to boost NeQuick", 2016 INTERNATIONAL CONFERENCE ON LOCALIZATION AND GNSS (ICL-GNSS), IEEE, 28 June 2016 (2016-06-28), pages 1-6, XP032938921, DOI: 10.1109/ICL-GNSS.2016.7533856 [retrieved on 2016-08-04] * the whole document * * page 1 - column 2 * | 1-10 | |

The present search report has been drawn up for all claims

| Place of search | Date of completion of the search | Examiner |
|---|---|---|
| Munich | 6 December 2017 | Ribbe, Jonas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 17 17 8545

This annex lists the patent family members relating to the patent documents cited in the above-mentioned European search report.
The members are as contained in the European Patent Office EDP file on
The European Patent Office is in no way liable for these particulars which are merely given for the purpose of information.

06-12-2017

| Patent document cited in search report | Publication date | Patent family member(s) | Publication date |
|---|---|---|---|
| US 2014009331 A1 | 09-01-2014 | CN 103443651 A | 11-12-2013 |
| | | EP 2690466 A1 | 29-01-2014 |
| | | JP 5706517 B2 | 22-04-2015 |
| | | JP WO2012128126 A1 | 24-07-2014 |
| | | US 2014009331 A1 | 09-01-2014 |
| | | WO 2012128126 A1 | 27-09-2012 |

EPO FORM P0459

For more details about this annex : see Official Journal of the European Patent Office, No. 12/82